Europäisches Patentamt

European Patent Office

Office européen des brevets

(11) Publication number: **0 272 231**

A1

## (12) EUROPEAN PATENT APPLICATION

(21) Application number: 87850339.0

(22) Date of filing: 05.11.87

(51) Int. Cl.⁴: **B60D 1/02** , B62D 53/00 , B64F 1/22

(30) Priority: 07.11.86 SE 8604782

(43) Date of publication of application:
22.06.88 Bulletin 88/25

(84) Designated Contracting States:
AT BE CH DE ES FR GB GR IT LI LU NL SE

(71) Applicant: **BT Industries Aktiebolag**
**P.O. Box 331**
**S-595 00 Mjölby(SE)**

(72) Inventor: **Eriksson, Per**
**Brändströmsgatan 19 A**
**S-803 54 Gävle(SE)**

(74) Representative: **Erixon, Bo et al**
**Kooperativa Förbundet (KF) Patent**
**Department Box 15200**
**S-104 65 Stockholm(SE)**

(54) A tractor and method for towing heavy vehicles.

(57) In accordance with one aspect the invention relates to a method of rigidly coupling together two tractors intended, for example, for moving aircraft on the ground and for towing aircraft in intercontinental traffic. Coupling of the tractors is effected either with the aid of a separate beam frame of the same length as the total length of the mutually coupled tractors, or by means of coupling devices anchored to the chassis of respective tractors.

In accordance with another aspect the invention relates to a single-model tractor (1) provided with coupling means for coupling the tractor to a similar tractor (4). The coupling means comprises a male coupling component (5) and a female coupling component (6). The rigid coupling between mutually coupled tractors is locked by passing a pin (8) forming part of a hydraulic piston-cylinder device, through the walls of the female coupling member (6) and through a hole (9) provided in the female coupling component (5) located between the walls of the female component.

Fig. 1

## A tractor and method for towing heavy vehicles.

The present invention relates to a tractor having a towing and a pushing function, and more specifically, although not exclusively, to tractor constructions which are intended for towing heavy vehicles. The invention also relates to a method of towing such vehicles.

There are many instances when it is necessary to move over short distances vehicles which are unable to move under their own power, for example vehicles which are not self-powered or vehicles which are provided with prime movers but where prevailing circumstances are such as to serve no useful purpose to activate the power plant of said vehicle or when it is desired to move said vehicle with the aid of a separate auxiliary machine for other reasons. Examples of the first mentioned case include semi-trailers or shipping containers supported on a wheeled chassis which are intended to be rolled-on and rolled-off sea-going freighters or railway transporters. Examples of the last mentioned case include the movement of aircraft on the ground, in the vicinity of airport buildings or hangars. In both of these cases, the vehicle is either pushed or pulled by some auxiliary prime mover and hence the term towing as used here and in the following is intended to imply both a pulling and a pushing action.

When towing freight haulage vehicles in ports or in railway freight yards, or when organizing the parking of such vehicles in freight terminals, there are used either conventional road haulage towing vehicles or special-duty terminal tractors. The towing strength and maneuverability of such vehicles or tractors are adapted to standard vehicles carrying normal loads. On those occasions when the freight goods consist of extremely heavy items carried by special-duty freight haulage vehicles, it is accepted that extremely powerful towing vehicles must be used.

With regard to airfields, airports, etc., each airport has its own towing capacity requirement. In the case of the very smallest and the least frequently used commercial airports, the aircraft are maneuvered and parked at a given safety distance from the airport buildings, etc. Airports which belong to the next size category are restricted to aircraft of a given maximum size, and hence the tractors used to tow the aircraft need only be dimensioned to tow the largest aircraft with full fuel and passenger load permitted to use the airport. In the case of the largest of the international airports, the ground movement of different sized aircraft is so frequent as to necessitate the use of several tractors of mutually different size and towing power.

These towing problems are encountered in small international airports and airports of intermediate size. Such airports are mostly used by aircraft which range in size from a Douglas DC9 to an Airbus. Larger aircraft, such as Douglas DC-10s and Boeing 747s also use such airports at times. These latter aircraft may have a starting or take-off weight, i.e. ramp weight, in the order of 400 tons. It will be obvious that a tractor which is designed to tow the smallest aircraft, which may have a ramp weight of beneath 100 tons, are not suitable for towing the larger aircraft, particularly during troublesome weather conditions when hardstandings and rolling surfaces are slippery.

An investment made by airports of an intermediate size in the largest and most powerful tractors which may be needed only from time to time would represent a significant load on the economic resources of the airport. Such tractors do not only demand a very high initial investment, but entail considerable operational costs. This renders the use of such giant tractors for towing smaller aircraft relatively expensive.

The present invention has been made in order to solve the aforedescribed problem and to enable the airports concerned to hold a unitary tractor pool. A tractor that is constructed in accordance with the invention as defined in the following claims enables at least two mutually similar tractors to be coupled together, such as to provide the towing capacity required to tow a vehicle of unusually heavy weight. The towing method according to the invention comprises coupling the tractors together mechanically and through the agency of maneuver-impulse transmitting lines. The lines may consist solely of electric cables or may comprise hydraulic or pneumatic lines, or a combination of such lines. The inventive tractor enables the towing vehicles used at an airport to be standardized so that vehicles of a single model will satisfy all towing requirements.

Coupling of the tractors can be effected by placing two tractors over a vertically movable frame that has a length equal to the sum of the lengths of the tractors, and by subsequently raising the frame and anchoring the chassis of the tractors thereto in some suitable manner, e.g. with the aid of clamps which can be adjusted vertically by means of hydraulic piston-cylinder devices. Since the tractors concerned are of extremely powerful construction, in order to attain sufficient traction of the wheels on the ground, they incorporate strong and robust beam-frame structures. The beam-frames can be used advantageously to provide the rigid connection between two mutually coupled tractors. In this case complementary coupling devices are attached to at least one of the ends of each tractor, these devices preferably being located widely apart in order to enhance the rigidity of the mutually connected tractors.

Although the tractors may be equipped with any known form of power plant or prime mover, it is more suitable to use tractors which have diesel-electric or hydrostatic drives, since it is necessary to synchronize the maneuvering functions of the mutually coupled tractors.

In order to be able to practice the inventive method successfully it is not only necessary to be able to steer all the wheels of the tractors, e.g. with the aid of steering angle sensors, but that the steering deflection of the wheels when travelling in a bend must be proportioned in dependence on the location of a respective wheel axle in the vehicle train, so that the whole vehicle train negotiates the curve about the same centre. This is achieved by programming the steering deflection of each pair of wheels in a data processor or microcomputer in each tractor, the microcomputer being constructed to send steer pulses to wheel steering motors, e.g. in the form of hydraulic piston-cylinder devices. Corresponding control cards are inserted in the microcomputer, the number of control cards used being contingent on whether two or more tractors are coupled together. The control cards also contain data concerning the number of driven axles, so as to obtain a uniform distribution of the tension forces between said driven axles. Normally, all wheels are driven. In order to counteract slipping or sliding of a single wheel when the friction between said wheel and the ground is reduced, due to a slippery road surface for instance, the computer programme preferably includes a torque limiting command.

A preferred embodiment of the invention will now be described in more detail with reference to the accompanying drawing, in which

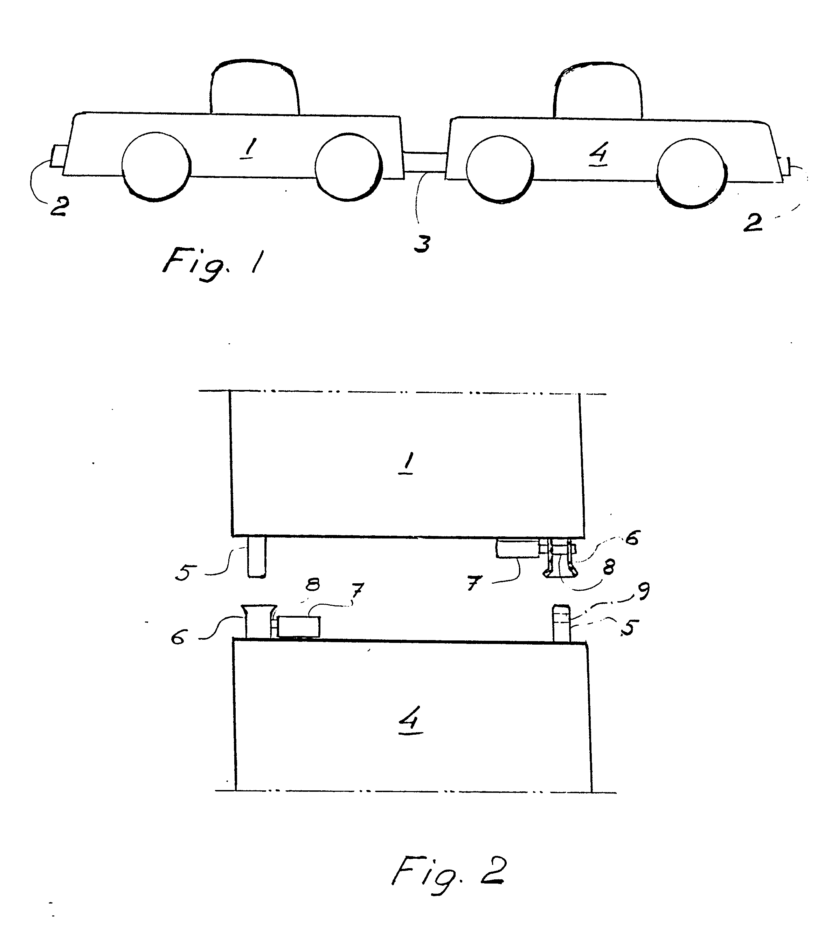

Figure 1 is a diagrammatic illustration of two mutually coupled tractors;

Figure 2 is a schematic illustration of inventive coupling devices fitted onto the mutually opposing ends of two tractors;

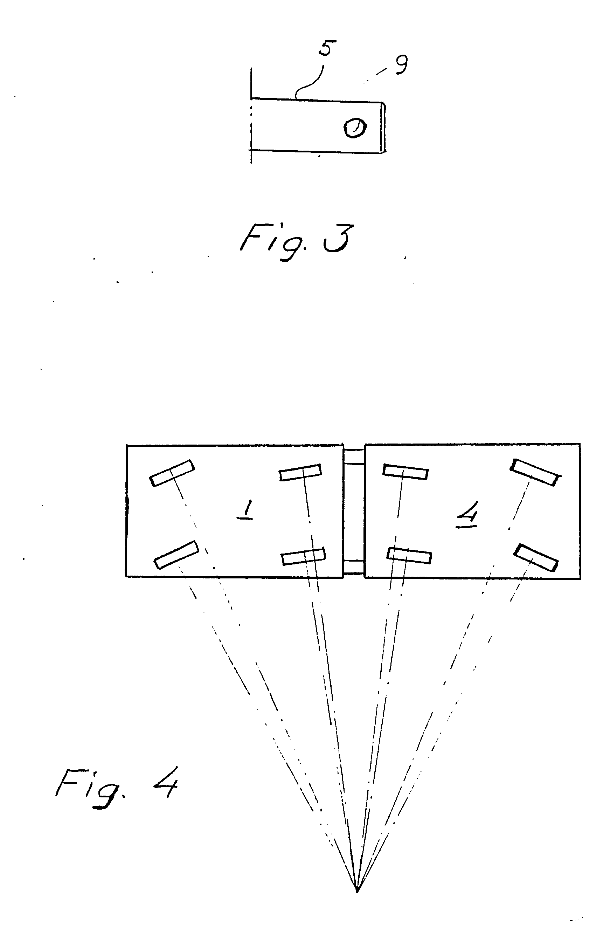

Figure 3 illustrates schematically the male component of the inventive coupling; and

Figure 4 illustrates diagrammatically the wheel angling of two mutually coupled tractors.

All four wheels of the illustrated tractor 1 are assumed to be driven hydrostatically by means of a hydraulic motor on each wheel axle. Located at one end of the tractor 1 is a towing device 2 for connection to a vehicle (not shown) to be towed by the tractor. This connection is effected with the aid of a towing bar or some other known means, the only criterion being that the connecting means is sufficiently strong to withstand the tension forces likely to occur when towing the heaviest vehicle which needs to be towed.

The other end of the tractor 1 has fitted thereto inventive coupling means, generally referenced 3, intended for coupling action with complementary coupling means fitted to another tractor 4 which is to be coupled to the first mentioned tractor 1. The tractors 1, 4 are illustrated with their respective coupling means 3 facing one another. The respective coupling means 3 each comprise a male coupling component 5 and a female coupling component 6, these components preferably being securely attached to the beam-frame structure constituting the tractor chassis, e.g. attached to the chassis as by welding or by some other suitable attachment means. The female and male components of respective coupling means 3 shall be spaced as far apart as possible, in order to enhance the rigidity of the two tractors coupled together by means of the inventive coupling means. The male coupling member 5 has a parallelepipedic configuration, with a rectangular cross-sectional shape, and is bevelled or chamfered at its leading end, such that opposing surfaces converge in order to facilitate guidance of the male coupling component 5 into the female coupling component 6 of the opposing coupling means 3. The female coupling component is box shaped, with the side surfaces of the box diverging towards the mouth thereof.

Subsequent to bringing two tractors 1, 4 into axial alignment with one another and bringing the ends of the tractors together so that the male coupling components 5 of respective coupling means are in full engagement with corresponding female coupling components 6, a transversely acting hydraulic piston-cylinder device 7 located adjacent a respective female component is activated, so as to lock the male components in their respective female counterparts. The pistons of the illustrated piston-cylinder devices 7 have provided on their ends robust and strong pins 8 which are moved by the pistons into respective transverse holes 9 in the male coupling and through corresponding holes in the female component. The pins are preferably of round cross-section and are slightly conical at their leading ends, and are dimensioned to fit snugly in the holes 9. The pins 8 extend through both of the vertical walls of the female coupling component, the holes of which have a diameter corresponding to the diameter of the respective pin 8.

Subsequent to mechanically coupling the tractors 1, 4, the requisite hydraulic hoses and electrical cables are connected up between the tractors 1, 4, either manually or mechanically. The electric cables are preferably housed in a common coupling head which is held in position by means of a spring force while the tractors 1, 4 are coupled together.

To enable the mutually coupled tractors to be maneuvered from a single driving seat, a control card is inserted into a slot provided herefor in the microcomputer of the tractor. As a result, all of the control impulses transmitted from the driving seat will be proportioned to respective wheel pairs, so that the wheels of the tractor train will negotiate a curve along arcuate paths having common centres. When required, the computer will also transform other maneuvering pulses, and if desired the driving force can be distributed unevenly between the drive axles of the tractor train. Similarly, the steering motors, e.g. hydraulic piston-cylinder devices, on the various wheels can be given a smaller turning power, or smaller piston extension, when the tractor train is travelling at a high speed.

In the aforegoing the invention has been described solely with regard to coupling together two mutually similar tractors. By positioning the towing device 2 centrally of the ends of a tractor and locating the respective coupling components 5, 6 on respective sides of the towing device, a tractor can be provided with the inventive coupling means 3 on both ends of the tractor. This enables more than two tractors to be coupled together, thereby enabling the towing power required to be achieved with the aid of a single tractor model. The advantages afforded hereby with regard to lower investment, uniform storage of spare parts, driving familiarity with just one vehicle model and the repair of a single tractor model, e.g. in airports, will be readily understood.

The described inventive coupling embodiment illustrates the versatility and standardization which the invention affords in use. The illustrated embodiment can be modified and modernized in separate units without detracting from the advantages afforded by the inventive coupling or without departing from the scope of the tractor and method set forth in the following claims.

## Claims

1. A method for towing heavy vehicles, characterized by rigidly coupling together two or more towing vehicles of a kind known per se, and by adapting pulses from the steering control of one of said towing vehicles for proportionally setting the angles of the wheels on the wheel shafts of the towing vehicle, or vehicles, coupled to said one vehicle.

2. A method according to claim 1, characterized by coupling the towing vehicles with the aid of coupling means controlled by hydraulic/pneumatic piston-cylinder devices.

3. A method according to claim 1 or 2, characterized in that driving of the mutually coupled towing vehicles is controlled by means of a computer located in one of the vehicles, such that the towing force is the same on all wheels.

4. A method according to claim 2 or 3, characterized in that the vehicles can be maneuvered from the driving position of any of the mutually coupled vehicles.

5. A method according to claim 3 or 4, characterized by reproportioning the pulses of the steering control with the aid of the computer such as to set the wheel angle of the vehicle wheels in dependence on the speed of the mutually coupled vehicles.

6. A tractor intended for towing heavy vehicles and comprising a towing and pushing vehicle with which all wheels are steered, characterized in that the tractor has fitted at one end thereof to a frame structure securely attached to the tractor chassis a coupling means for coupling said tractor to at least one similar tractor.

7. A tractor according to claim 6, characterized in that coupling means effects a rigid connection of one tractor to another.

8. A tractor according to claim 6 or 7, characterized in that the coupling means comprises a male coupling component and a female coupling component and in that said male and female coupling components are spaced widely apart.

9. A tractor according to claim 8, characterized by a translatory movable piston which is located adjacent the inner end of a respective female coupling component and which can be accommodated in a hole extending through the leading end of the male coupling component.

10. A tractor according to any of claims 6-9, characterized in that the tractor is provided with computer means which is constructed to receive pulses from conventional vehicle-driving and steering means such as to transmit proportioned pulses for controlling vehicle speed and vehicle braking and steering the mutually coupled tractors so that the tractors negotiate curves around common centres said pulses being proportioned in dependence on the number of the tractors that are mutually coupled together.

11. A tractor according to any of claims 6-10, characterized in that the tractors of a mutually coupled tractor train can be controlled from the driving seat of a single tractor, irrespective of the number of tractors in said train.

12. A tractor according to any of claims 6-11, characterized in that the tractor is hydrostatically driven.

13. A tractor according to any of claims 6-11, character in that the tractor is diesel-electrically driven.

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 069 107 (J. LEYEN) * Page 1, line 15 - page 3, line 15; figures 1-3 * --- | 1,3-6, 10-11, 13 | B 60 D 1/02 B 62 D 53/00 B 64 F 1/22 |
| A | US-A-3 981 517 (G. CROCHET) * Column 14, paragraph 3; figures 1-16 * --- | 1,2,6,8 | |
| A | DE-A-2 602 872 (PORSCHE) * Page 5, paragraphes 2-3; figure 3 * --- | 1,6 | |
| A | US-A-3 889 770 (H. HERBERT) * Column 1, lines 1-32; figures 1-2 * --- | 1,6 | |
| A | US-A-3 326 314 (L. WOLF) * Column 1, paragraphs 2-4; figure 1 * --- | 1,6 | |
| A | US-A-3 227 235 (T. BUDZICH) * Column 1, lines 43-65; figures 1-9 * --- | 6,12 | |
| A | US-A-1 125 252 (J. BALLARD) * Abstract; figure * ----- | 6-9 | TECHNICAL FIELDS SEARCHED (Int. Cl.4) B 60 D B 60 K B 62 D B 61 G B 64 F |

The present search report has been drawn up for all claims

| Place of search | Date of completion of the search | Examiner |
|---|---|---|
| THE HAGUE | 18-02-1988 | LINTZ C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P0401)